# EUROPÄISCHE PATENTANMELDUNG

(11) **EP 2 124 424 A2**
(43) Veröffentlichungstag der Anmeldung: **25.11.2009**
(21) Anmeldenummer: 09160782.0
(22) Anmeldetag: 20.05.2009
(51) Int. Cl.: H04M 1/73

(54) **Verfahren, Basisstation, mobiles Endgerät und Kommunikationsanordnung zum Verifizieren des Funkbereichs einer Basisstation durch ein mobiles Endgerät**

(30) Priorität: 21.05.2008 DE 102008024638
(71) Anmelder: Gigaset Communications GmbH, 81379 München (DE)
(72) Erfinder: Bolinth, Edgar, 41352 Korschenbroich (DE)
(74) Vertreter: Giesen, Nicole

(57) **Zusammenfassung**

An einem mobilen Endgerät (ME), das mit einer Basisstation (BS) in dessen Funkbereich (RR) drahtlos verbindbar ist, wird bei einem empfangsbereiten Zustand der Basisstation (BS) - beispielsweise durch einen Benutzer - ein Aktivierungselement (AE) aktiviert, wodurch im mobilen Endgerät (ME) das Aussenden eines Aktivierungs- Funksignal (afs) initialisiert wird. Bei einem Empfang des Aktivierungs- Funksignals (afs) in einer Basisstation (BS) werden in dieser die inaktiven Sendekomponenten (SK) aktiviert, von denen zumindest temporär ein Aktiv- Funksignal (aks) gebildet und im Funkbereich (RR) ausgesandt wird. Hierdurch wird eine Basisstation (BS), deren Sendekomponenten (SK) inaktiv sind, nur vorübergehend in einen Zustand mit erhöhtem Energieverbrauch gesteuert, sofern ein Benutzer wissen möchte, ob sich sein mobiles Endgerät (ME) noch in Funkreichweite einer bzw. seiner Basisstation (BS) befindet. Aufgrund des ausgestrahlten Aktiv- Funksignal (aks) wird im mobilen Endgerät (ME) eine Empfangsfeldstärkemessung (rssi) durchgeführt und das Ergebnis vorzugsweise visuell im Display des mobilen Endgerätes (MT) angezeigt, so dass der Benutzer erkennen kann ob er sich noch innerhalb der Funkreichweite der Basisstation (BS) befindet.

## Beschreibung

In aktuellen schnurlosen Kommunikationsanordnungen, beispielsweise realisiert gemäß einer Erweiterung des DECT-Standards, ist aus Energiespargründen und einer Reduzierung der Abstrahlung des Funksignals im Ruhezustand bzw. Stand-by-Zustand des Kommunikationssystems vorgesehen, in den Basisstationen den Broadcast- bzw. Rundsendekanal nur bei ankommenden Anrufen für einen Verbindungsaufbau einzuschalten. Der Broadcastkanal - in der DECT- Fachwelt als Dummy Bearer bekannt - wird in einer Erweiterung des DECT- Standards in schneller Abfolge in einem Rahmen bzw. Frame mehrfach in verschiedenen Zeitschlitzen und auf verschiedenen Frequenzen übertragen. Dies ermöglicht dem mobilen Endgerät eine schnelle Synchronisation und damit eine schnelle Signalisierung des eingehenden Anrufs und folglich einen schnellen Verbindungsaufbau zwischen einer Basisstation und einem mobilen Endgerät. Im Gegensatz hierzu wird beim aktuellen DECT- Standard der Dummy Bearer in jedem Rahmen bzw. Frame genau einmal auf einer festen Frequenz übertragen.

Gemäß der Erweiterung des aktuellen DECT- Standards, wird bei Anrufen, die vom mobilen Endgerät eingeleitet werden, das mobile Endgerät ebenfalls entweder in einem Broadcastkanal in schneller Abfolge in einem Rahmen mehrfach in verschiedenen Zeitschlitzen und auf verschiedenen Frequenzen ein Aktivierungs-Funksignal bzw. ein Wake-up Broadcast Signal oder das Wake-up- Signal auf einer im mobilen Endgerät gespeicherten Vorzugsfrequenz mindestens einmal zur Basisstation übertragen.

Bei Anrufen, die vom mobilen Endgerät eingeleitet werden, überträgt das mobile Endgerät ebenfalls in einem Broadcastkanal in schneller Abfolge in einem Rahmen mehrfach in verschiedenen Zeitschlitzen und auf verschiedenen Frequenzen ein Aktivierungs-Funksignal bzw. ein Wake-up Broadcast Signal.

Dies bedeutet, dass in einem Ruhezustand der Basisstation, in der kein Funksignal ausgesandt wird, die mobilen bzw. schnurlosen Endgeräte nicht mehr anhand eines von der Basisstation ausgesandten Funksignals feststellen können, ob sich diese noch im Funkbereich der Basisstation befinden. Dieses Problem wurde bisher derart gelöst, dass der Broadkastkanal bzw. Dummy Bearer periodisch über die Zeit gesendet wurde, wobei durch das kontinuierliche Aussenden hierbei der Stromverbrauch und die Abstrahlung nicht wesentlich reduziert werden können.

Die der Erfindung zugrunde liegende Aufgabe besteht darin, ein Verfahren bzw. eine Kommunikationsanordnung mit mobilen Endgeräten und einer Basisstationen hinsichtlich des Energieverbrauchs und einer Reduzierung der Abstrahlung eines Funksignals insbesondere in Betriebzuständen - vorzugsweise dem Ruhezustand bzw. dem Stand-By-Zustand - zu verbessern, bei denen keine Verbindung aufgebaut wird oder ist. Die Aufgabe wird durch die Ansprüche 1,7,8 und 9 gelöst.

Der wesentliche Aspekt des erfindungsgemäßen Verfahrens ist darin zu sehen, dass in empfangsbereiten Zustand - Stand-By-Zustand bzw. Ruhezustand - der Basisstation am mobilen Endgerät - beispielsweise durch den Benutzer - ein Aktivierungselement aktiviert wird und das aktivierte Aktivierungselement im mobilen Endgerät das Aussenden eines Aktivierungs- Funksignals initialisiert. Bei einem Empfang des Aktivierungs-Funksignals in der Basisstation werden in dieser die inaktiven Sendekomponenten aktiviert, von denen zumindest temporär ein Aktivierungs- Funksignal ausgesandt wird. Ein wesentlicher Vorteil des erfindungsgemäßen Verfahrens besteht darin, dass eine Basisstation, deren Sendekomponenten inaktiv sind, nur dann vorübergehend in einen Zustand mit erhöhtem Energieverbrauch gesteuert wird, sofern ein Benutzer wissen möchte, ob sich sein mobiles Endgerät noch in Funkreichweite bzw. im Funkbereich einer oder seiner Basisstation befindet.

Gemäß einer Weiterbildung der Erfindung wird im mobilen Endgerät bei einem Empfang des Aktivierungs- Funksignals dessen Empfangsstärke bestimmt und am mobilen Endgerät visuell und/oder akustisch angezeigt und/oder aus der gemessenen Empfangsstärke ist eine Information ableitbar, inwieweit sich das mobile Endgerät (ME) im Funkbereich einer Basisstation (BS) befindet. Durch die Anzeige der Empfangsstärke, insbesondere der Empfangsfeldstärke kann der Benutzer erkennen, inwieweit er sich noch von einer Basisstation entfernen kann oder ob er sich bereits im Grenzbereich des Funkbereichs einer Basisstation befindet. Die Empfangsstärke kann mit einem Empfangsstärke-Schwellwert verglichen werden, der eine Mindest-Empfangsstärke angibt, bei welchem das mobile Endgerät noch als im Funkbereich der Basisstation befindlich, bestimmt ist.

Vorteilhaft wird von einem mobilen DECT- Endgerät das Aktivierungs-Funksignal in Form des (Ruf-)Signalisierungskanals, und von einer DECT- Basisstation das Aktiv-Funksignal in Form des Signalisierungs-Rundsendekanal ausgesandt wird, so dass die bereits vorhandenen physikalischen Funkkanäle für das erfindungsgemäße Verfahren mitbenutzt werden. Hierbei unterscheidet sich der logische Informationsgehalt, welcher über die physikalischen Kanäle übertragen wird, von den bekannten Informationsgehalten, wodurch eine neue Funktionalität im mobilen Endgerät und in den Basisstationen bewirkt wird.

Vorteilhaft wird von einem mobilen DECT- Endgerät das Aktivierungs- Funksignal im Signalisierungskanal und von einer DECT- Basisstation das Aktiv- Funksignal im Signalisierungs-Rundsendekanal ausgesandt wird, d.h. die vorhandenen Funkkanäle werden für das erfindungsgemäße Verfahren mitbenutzt.

Gemäß einer weiteren Ausgestaltung der Erfindung wird bei einer zumindest als eine Taste ausgestaltetes Aktivierungselement durch Betätigen der zumindest einen Taste das Aussenden des Aktivierungs-Funksignals bewirkt. Die Aktivierung kann auch durch ein als Bewegungssensor oder Drucksensor oder Sprachsensor ausgestalteten Aktivierungselement durch Bewegen des mobiles Endgeräts oder Drücken auf den Drucksensor oder durch eine Spracheingabe des Benutzers das Aussenden des Aktivierungs-Funksignals bewirkt werden.

In einer weiteren bevorzugten Ausführungsform ist das Aktivierungselement als Taste ausgestaltet, die farblich markiert und/oder farblich beleuchtbar ist. Vorzugsweise weist das mobile Endgerät ein als Taste ausgestaltetes Aktivierungselement auf, das farblich markiert und/oder farblich beleuchtbar ist.

Weitere vorteilhafte Ausgestaltungen der Erfindung, insbesondere ein mobiles Endgerät oder eine Basisstation oder eine Kommunikationsanordnung sind den weiteren Ansprüchen zu entnehmen.

Im Folgenden werden die Erfindung und deren Weiterbildungen anhand einer zeichnerischen Darstellung näher erläutert.

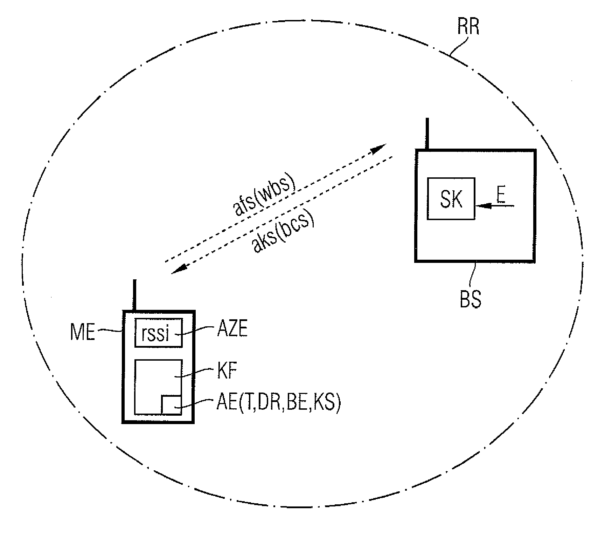

Die Figur zeigt in einer schematischen Darstellung beispielhaft ein von mehreren möglichen mobilen Endgeräten ME, das sich im Funkbereich RR einer Basisstation BS befindet, wobei der Funkbereich RR durch einen strichpunktierten Kreis angedeutet ist. Für das Ausführungsbeispiel sei angenommen, dass das mobile Endgerät ME und die Basisstation BS hinsichtlich der Funkstrecke gemäß einem DECT- Standards ausgestaltet sind. Alternativ - nicht dargestellt - kann die Basisstation als mobile Basisstation ausgestaltet sein, wobei vorteilhaft die mobilen Endgeräte in einem Walkie-Talkie-Modus mit der mobilen Basisstation kommunizieren.

Das mobile Endgerät ME weist eine Anzeige AZE sowie eine Tastenfeld KF auf, mit dessen Hilfe Kommunikationsbeziehungen zu anderen Endgeräten des jeweiligen Netzwerks oder weiteren Netzwerken signalisiert bzw. aufgebaut werden können.

Gemäß der Erfindung ist am mobilen Endgerät ME ein Aktivierungselement AE realisiert, mit dessen Hilfe ein Aktivierungsfunksignal afs gebildet und ausgesandt wird. Das Aktivierungselement AE kann durch unterschiedliche, eine Schaltfunktion bewirkende Komponenten verwirklicht werden. Beispielsweise wird einer der vorhandenen Tasten T eine weitere Schaltebene hinzugefügt oder es wird eine vorhandene nicht benutzte Schaltebene dazu benutzt, die erfindungsgemäße Schaltfunktion einzubringen. Alternativ kann die Schaltfunktion auch an Drucksensoren DR oder Bewegungs- bzw. Lagesensoren BE oder einem Sprachsensor SP - Mikrofon - ausgebildet sein, wobei durch Druck auf den Drucksensor oder durch Bewegen des mobilen Endgeräts ME oder durch eine Spracheingabe die Schaltfunktion ausgelöst wird - in der Figur durch die Bezeichnungen BE,DR,SP angedeutet. Bei Einsatz eines Bewegungs- oder Lagesensors BE wird eine Veränderung der Lage eines mobilen Endgeräts ME festgestellt, wobei ein Benutzer häufig wissen will, ob sich sein mobiles Endgerät ME noch im Funkbereich RR der Basisstation BS befindet. Generell will bei einer Veränderung der Position eines Benutzers ME dieser wissen, ob sein mobiles Endgerät ME sich noch im Funkbereich RR einer oder seiner Basisstation BS befindet. Ein Drucksensor DR zum Einleiten des Feststellens, ob sich das mobile Endgerät ME noch im Funkbereich RR einer oder seiner Basisstation BS befindet, ist dann vorteilhaft, wenn ein Benutzer des mobilen Endgeräts ME keine Taste für die Schaltfunktion betätigen will, sondern auf einen einzigen in der Oberfläche des mobilen Endgeräts ME integrierten Drucksensor (DE) drücken will, um in der Anzeige AZ eine Information zu erhalten, ob sich sein mobiles Endgerät ME im Funkbereich RR der Basisstation BS befindet - nicht dargestellt.

Eine weitere vorteilhafte Realisierungsalternative besteht darin, dass das Aktivierungselement AE als kapazitiver oder induktiver Sensor KS ausgestaltet ist. Der kapazitive oder induktive Sensor KS kann derart realisiert sein, dass durch berührungsloses Annähern eines Benutzers - insbesondere die Finger einer Hand eines Benutzers - an den Sensor KS das Bilden und Aussenden des Aktivierungs-Funksignals afs bewirkt wird. Derartige Sensoren werden insbesondere in der Near Field Communication eingesetzt. Die kapazitiven und induktiven Sensoren KS können auch derart ausgestaltet sein, dass das Aussenden des Aktivierungssignals afs durch Berühren des Sensors KS bewirkt wird.

Nachdem das Aktivierungselement AE, im Ausführungsbeispiel eine Taste T, betätigt ist, wird mit Hilfe der Schaltfunktion das mobile Endgerät ME veranlasst, ein Aktivierungsfunksignal afs auszusenden. Hierzu werden bei einem gemäß dem DECT-Standard ausgebildeten mobilen Endgerät ME die für das Aussenden erforderlichen Komponenten des mobilen Endgeräts ME aktiviert. Mit Hilfe der hierdurch aktivierten Steuer- und Sendekomponente wird ein Aktivierungsfunksignal afs gebildet und an die Basisstation BS drahtlos übermittelt. Mit diesem Aktivierungsfunksignal afs wird in der Basisstation BS ein Signal angefordert, mit dessen Hilfe das mobile Endgerät ME feststellen kann, ob es sich noch im Funkbereich RR einer Basisstation BS befindet.

Erfindungsgemäß sei angenommen, dass sich die Basisstation BS in einem Bereitschaftszustand - d.h. empfangsbereiten Zustand bzw. Stand-By-Zustand oder Ruhezustand - befindet, d.h. die Sendekomponenten SK bzw. der Rundsendekanal bzw. Broadcastkanal ist inaktiv bzw. abgeschaltet bzw. es werden keine Rundsende- bzw. Broadcastkanal - Signale ausgesandt. Im Bereitschaftszustand kann die Basisstation BS jedoch Aktivierungsfunksignale afs empfangen.

Um beispielsweise in einer gemäß dem erweiterten DECT- Standard realisierten Basisstation BS den Rundsendekanal bzw. Dummy Bearer zu aktivieren, wird im mobilen Endgerät ME ein Wake-Up-Broadcast-Signal wbs gebildet und drahtlos an die Basisstation BS übertragen. In dieser werden nach einem Empfang eines Wake-Up-Broadcast-Signal wbs die für den Rundsendekanal bzw. Broadcastkanal erforderlichen Sendekomponenten SK mit elektrischer Energie E versorgt. Als Antwort auf das empfangene Wake-Up-Broadcast-Signal wbs wird vorteilhaft in periodischen Abständen - beispielsweise 10ms - als Aktiv-funksignal aks ein Rundsendekanalsignal bzw. Broadcast Channel Signal bcs gebildet und über den aktivierten Rundsendekanal im Funkbereich RR der Basisstation BS für eine vorgegebene bzw. vorgebbare Zeitdauer ausgesandt.

Da sich gemäß dem Ausführungsbeispiel das mobile Endgerät ME im Funkbereich RR der Basisstation BS befindet, kann das mobile Endgerät ME das Broadcast Channel Signal bcs empfangen und auch dessen Empfangsfeldstärke rssi messen. Das Messergebnis wird im mobilen Endgerät ME an dessen Anzeige AZE übertragen und dort visualisiert bzw. dargestellt. Die Darstellung erfolgt beispielsweise durch eine Zahl oder balkenförmig oder punktförmig. Für die Messung der Empfangsfeldstärke rssi ist für mobile Endgeräte ME ein RSSI- Messverfahren (received signal strength indicator oder radio signal strength indicator) festgelegt, mit dessen Hilfe die Empfangsfeldstärke rssi des von einer Basisstation BS ausgesandten Funksignals gemessen und als Indikator an einer Anzeigeeinheit AZE des zugehörigen mobilen Endgeräts ME angezeigt werden kann. Dieser Indikator wird auch als Indikator für einen Kanalwechsel oder für die Bestimmung der Entfernung von der jeweiligen Basisstation BS benutzt. Alternativ kann die gemessene Empfangsfeldstärke rssi akustisch über eine entsprechende Ausgabeeinheit wie Lautsprecher ausgegeben werden - nicht dargestellt. Der Wert der Empfangsfeldstärke rssi oder Informationen über den Funkbereich RR der jeweiligen Basisstation BS kann hierbei verbal oder über Tonhöhen oder Tonlängen ausgegeben werden.

Aus dieser gemessenen Empfangsstärke rssi des Broadcast Channel Signals bcs kann auch abgeleitet werden, ob sich das mobile Endgerät ME noch im Funkbereich RR der Basisstation BS befindet. Hierbei kann ein Empfangsstärke-Schwellwert für das Broadcast Channel Signal bcs definiert werden oder bereits im mobilen Endgerät ME für andere Zwecke gespeichert sein, bei dessen Unterschreiten das mobile Endgerät ME als nicht mehr im Funkbereich RR befindlich an der Anzeige AZE angezeigt wird.

Erfindungsgemäß wird das Aussenden von Broadcast Channel Signal bcs temporär durchgeführt, sofern keine Kommunikationsbeziehung bzw. kein Verbindungsaufbau eingeleitet wird. Erfindungswesentlich ist hierbei, dass der Rundsendekanal bzw. der Broadcast Channel bzw. das Aussenden des Broadcast Channel Signals bcs - automatisch bzw. selbständig nach einer vordefinierten Zeitdauer - beispielsweise 5 Sekunden - abschaltet wird. Die maximale Sendedauer des Aktiv- Funksignal aks wird vorteilhaft entweder über die Mobilstation ME oder direkt an der Basisstation BS eingestellt. Mit dem Abschalten den Rundsendekanals kann die Energie E bzw. Energieversorgung von den Sendekomponenten SK geschaltet werden, die den Rundsendekanal realisieren.

Dies bedeutet, dass nur für einen kurzen Zeitraum für das Ermitteln, ob sich ein anfragendes mobiles Endgerät ME noch im Funkbereich RR einer oder seiner Basisstation BS befindet, die hierfür erforderlichen Sendekomponenten SK in der Basisstation BS mit Energie E versorgt werden, wodurch der gesamte Energieverbrauch von Basisstationen BS und die durchschnittliche Abstrahlung von Funksignalen reduziert wird.

## Patentansprüche

1. Verfahren für mobile Endgeräte (ME), die mit einer Basisstation (BS) in dessen Funkbereich (RR) drahtlos verbindbar sind,
- bei dem bei in einem empfangsbereiten Zustand der Basisstation (BS) am mobilen Endgerät (ME) ein Aktivierungselement (AE) aktiviert wird,
- bei dem das aktivierte Aktivierungselement (AE) im mobilen Endgerät (ME) das Aussenden eines Aktivierungs- Funksignal (afs) initialisiert, und
- bei dem bei einem Empfang des Aktivierungs- Funksignals (afs) in einer Basisstation (BS) in dieser die inaktiven Sendekomponenten (SK) aktiviert werden, von denen zumindest temporär ein Aktiv- Funksignal (aks) gebildet und im Funkbereich (RR) ausgesandt wird.

2. Verfahren nach Anspruch 1, **dadurch gekennzeichnet,**
**dass** das Aktiv- Funksignal (aks) temporär periodisch oder temporär pseudo- zufällig und mindestens auf einer Frequenz oder in einem Zeitrahmen mehrfach und auf verschiedenen Frequenzen ausgesandt wird.

3. Verfahren nach einem der vorhergehenden Ansprüche, **dadurch gekennzeichnet,**
**dass** das Aktivierungs- Funksignal (afs) in dem Signalisierungskanal übertragen wird, welcher für den Aufbau von Kommunikationsbeziehungen zwischen dem mobilen Endgerät und der Basisstation benutzt wird.

4. Verfahren einem der vorhergehenden Ansprüche, **dadurch gekennzeichnet, dass**
- bei einer zumindest als eine Taste (T) ausgestaltetes Aktivierungselement (AE) durch Betätigen der zumindest einen Taste (T) oder
- bei einem als Bewegungssensor (BE) ausgestalteten Aktivierungselement (AE) durch Bewegen des mobilen Endgeräts (ME) oder
- bei einem als Drucksensor (DR) ausgestalteten Aktivierungselement (AE) durch Drücken auf den Drucksensor (DR) oder
- bei einem Sprachsensor (SP) durch eine Spracheingabe eines Benutzers
- bei einem als kapazitiven oder induktiven Sensor (KS) ausgestalteten Aktivierungselement (AE) durch berührungsloses Annähern eines Benutzers an den Sensor (KS) oder durch Berühren des Sensors (KS)
das Bilden und Aussenden des Aktivierungs-Funksignals (afs) bewirkt wird.

5. Verfahren nach einem der vorhergehenden Ansprüche, **dadurch gekennzeichnet,**
**dass** bei einem als Taste (T) ausgestalteten Aktivierungselement (AE) die Taste zum Aufbau von Kommunikationsbeziehung zwischen mobilen Endgerät (ME) und Basisstation (BS) mitbenutzt wird.

6. Verfahren nach einem der vorhergehenden Ansprüche, **dadurch gekennzeichnet,**
**dass** inaktive Sendekomponenten (SK) einer Basisstation (BS), von denen zumindest temporär ein Aktiv- Funksignal (aks) ausgesandt wird, **dadurch** aktiviert werden, dass diese Sendekomponenten (SK) mit Energie (E) versorgt werden, wobei bei nicht aktivierten Sendekomponenten diese nicht mit Energie (E) versorgt werden oder die Energiezufuhr reduziert ist.

7. Verfahren nach einem der vorhergehenden Ansprüche, **dadurch gekennzeichnet, dass** die Sendedauer des Aktiv-Funksignals (aks) an der Basisstation (BS) und/oder an der Mobilstation (ME) einstellbar ist.

8. Mobiles Endgerät zur drahtlosen Verbindung mit einer Basisstation (BS) in dessen Funkbereich (RR), wobei die Basisstation (BS) empfangsbereit ist,
- mit einem aktivierbaren Aktivierungselement (AE) zum Initialisieren des Bildens und Aussendens eines Aktivierungs-Funksignals (afs),
- mit Empfangskomponenten zum Empfang eines Aktiv- Funksignals (aks), wobei nach einem Empfang des Aktivierungs-Funksignals (afs) in einer Basisstation (BS) in dieser inaktive Sendekomponenten (SK) aktiviert werden, von denen zumindest temporär das Aktiv- Funksignal (aks) gebildet und im Funkbereich (RR) ausgesandt wird.

9. Basisstation zur drahtlosen Verbindung mit einem mobilen Endgerät (ME) im Funkbereich (RR) der Basisstation (S), wobei die Basisstation (BS) empfangsbereit ist,
- mit einem Empfänger zum Empfang eines Aktivierungs- Funksignals (afs), das nach einer initialisierten Aktivierung eines Aktivierungselements (AE) vom mobilen Endgerät (ME) gebildet und ausgesandt wird,
- mit nicht aktivierten Sendekomponenten (SK), die nach dem Empfang eines Aktivierungs- Funksignals (afs) aktiviert werden und die zumindest temporär ein Aktivierungs- Funksignal (aks) bilden und im Funkbereich (RR) aussenden.

10. Kommunikationsanordnung zum drahtlosen Verbinden eines mobilen Endgeräts mit einer Basisstation in dessen Funkbereich (RR), wobei die Basisstation (BS) empfangsbereit ist,
- mit einem aktivierbaren Aktivierungselement (AE) im mobilen Endgerät (ME) zum Initialisieren des Bildens und Aussendens eines Aktivierungs-Funksignals (afs), und
- mit nicht aktivierten Sendekomponenten (SK) in der Basisstation (BS), die nach dem Empfang eines Aktivierungs-Funksignals (afs) aktiviert werden und die zumindest temporär ein Aktivierungs- Funksignal (aks) bilden und im Funkbereich (RR) aussenden.

11. Basisstation nach einem der Ansprüche 8 bis 10, derart ausgestaltet, dass das Aktiv-Funksignal (aks) temporär periodisch oder temporär pseudo- zufällig und mindestens auf einer Frequenz oder in einem Zeitrahmen mehrfach und auf verschiedenen Frequenzen ausgesandt wird.

12. Mobiles Endgerät nach einem der Ansprüche 8 bis 10, derart ausgestaltet, dass bei einem Empfang des Aktiv- Funksignals (aks) dessen Empfangsstärke (rssi) bestimmt und visuell und/oder akustisch angezeigt wird und/oder
dass aus der gemessenen Empfangsstärke (rssi) eine Information ableitbar ist, inwieweit sich das mobile Endgerät (ME) im Funkbereich (RR) einer Basisstation (BS) befindet.

13. Mobiles Endgerät und Basisstation nach einem der Ansprüche 8 bis 10, derart ausgestaltet,
dass von einem mobilen DECT- Endgerät (ME) das Aktivierungs-Funksignal (afs) im Signalisierungskanal und von einer DECT-Basisstation (BS) das Aktiv- Funksignal (aks) im Signalisierungs- Rundsendekanal ausgesandt wird.

14. Mobiles Endgerät nach einem der Ansprüche 8 bis 10, derart ausgestaltet, dass
- bei einer zumindest als eine Taste (T) ausgestaltetes Aktivierungselement (AE) durch Betätigen der zumindest einen Taste (T) oder
- bei einem als Bewegungssensor (BE) ausgestalteten Aktivierungselement (AE) durch Bewegen des mobilen Endgeräts (ME) oder
- bei einem als Drucksensor (DR) ausgestalteten Aktivierungselement (AE) durch Drücken auf den Drucksensor (DR) oder
- bei einem Sprachsensor (SP) durch eine Spracheingabe eines Benutzers
- bei einem als kapazitiven oder induktiven Sensor (KS) ausgestalteten Aktivierungselement (AE) durch berührungsloses Annähern eines Benutzers an den Sensor (KS) oder durch Berühren des Sensors (KS)
das Bilden und Aussenden des Aktivierungs-Funksignals (afs) bewirkt wird.

15. Basisstation nach einem der Ansprüche 8 bis 10, derart ausgestaltet,
dass die Sendekomponenten, von denen zumindest temporär ein Aktiv- Funksignal (aks) ausgesandt wird, **dadurch** aktiviert werden, dass diese Sendekomponenten (E) mit Energie versorgt werden, wobei bei nicht aktivierten Sendekomponenten (SK) diese nicht mit Energie (E) versorgt werden oder die Energiezufuhr reduziert ist.
